(19) Europäisches Patentamt
European Patent Office
Office européen des brevets

(11) Publication number: **0 565 298 A2**

(12) # EUROPEAN PATENT APPLICATION

(21) Application number: **93302532.2**

(51) Int. Cl.$^5$: **C08G 18/32,** C08G 18/50

(22) Date of filing: **31.03.93**

A request for correction of Table 1 has been filed pursuant to Rule 88 EPC. A decision on the request will be taken during the proceedings before the Examining Division (Guidelines for Examination in the EPO, A-V, 2.2).

(30) Priority: **08.04.92 US 865170**

(43) Date of publication of application: **13.10.93 Bulletin 93/41**

(84) Designated Contracting States: **DE FR GB**

(71) Applicant: **TEXACO CHEMICAL COMPANY**
**3040 Post Oak Boulevard**
**Houston, Texas 77056 (US)**

(72) Inventor: **Grigsby, Robert Allison**
**7404 Fireoak Drive**
**Austin, Texas 78761 (US)**
Inventor: **Zimmerman, Robert LeRoy**
**4202 Cordova**
**Austin, Texas 78759 (US)**
Inventor: **Cuscurida, Michael**
**3543 Greystone Drive**
**Austin, Texas 78731 (US)**
Inventor: **Speranza, George Phillip**
**2800 Silver Leaf Circle**
**Austin, Texas 78757 (US)**

(74) Representative: **Brock, Peter William et al**
**URQUHART-DYKES & LORD 91 Wimpole Street**
**London W1M 8AH (GB)**

(54) **Hindered amines and use in producing rim polyurea elastomers.**

(57) Novel hindered polyetherpolyamines having the structure :

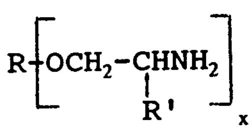

or

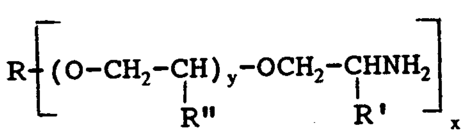

wherein R is a central moiety from a polyol ; at least one R' is a straight or branched alkyl group having at least 10 carbon atoms, the balance being hydrogen ; R" is hydrogen or an alkyl group having 1 or 2 carbon atoms ; x is 2 or more and y is 20 to 80, can be obtained by

reacting a polyol having two or more hydroxyl groups with an effective amount of a long chain alkyl epoxide to give an at least partially hindered intermediate having hydroxyl terminations ; and

aminating at least one of the hydroxyl terminations on the intermediate to primary amino groups.

These hindered polyetherpolyamines react more slowly with polyisocyanates than the corresponding unhindered amines in the production of polyureas. This slower reactivity enables moulds to be completely filled before reaction occurs in the RIM process.

EP 0 565 298 A2

The invention relates to novel hindered amines and methods for making the same, and in one aspect, more particularly relates to using hindered amines to retard reactivity with polyisocyanates in the production of reaction injection moulded (RIM) elastomers.

It is well known in the art of producing synthetic resins to react a polyol or polyamine (or a compound containing both hydroxyl and amine functionalities) with a polyisocyanate in the presence of a catalyst, such as a tertiary amine or a metal catalyst (e.g. tin), to give a cross-linked resin having polyurea groups. The resulting reaction products can be, for example, flexible polyurethane foams, semi-rigid foams, rigid foams, elastomers or spray polyurea. Polyurea reaction injection moulded material (RIM) materials, and reinforced RIM (RRIM) products, containing embedded glass, metal or plastic reinforcing fibres, may be made by reacting a polyamine and a polyisocyanate in a heated mould under pressure, optionally with a catalyst.

A common problem encountered when moulds are employed to shape the articles made, particularly when RIM systems are used, is that of having the components react together at a rate appropriate to the rate of filling of the mould. For example, if an automotive body panel is being fabricated, the components should preferably not start reacting together until the entire mould is filled with the mixture. If reaction occurs prematurely, the RIM materials will set up or "gel" in part of the mould, and prevent the liquid material from completely filling the mould, resulting in an incomplete part. In one aspect of the invention, it is desirable that the system have longer "flow times" (i.e., longer time for the components to flow into the mould in a mixed state before reaction occurs). At the same time, the reaction should not take too long once begun, since it is desirable to cycle parts through the mould at as high a speed as possible, so as to reduce production costs.

This invention is concerned, therefore, with the problem of providing polyamines that will react with isocyanate compounds in a RIM process to form moulded polyurea articles, but which will not react with the isocyanate compounds at a rate too fast to permit proper filling of a mould before the isocyanate/amine reaction takes place.

The present invention provides a process for preparing a polyurea elastomer by reacting a polyisocyanate with a hindered polyetherpolyamine obtainable by

reacting a polyol having two or more hydroxyl groups with an effective amount of a long chain alkyl epoxide to give an at least partially hindered intermediate having hydroxyl terminations; and

aminating at least one of the hydroxyl terminations on the intermediate to primary amino groups.

The present invention also provides novel hindered polyetherpolyamines having the structure:

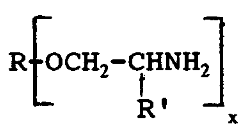

or

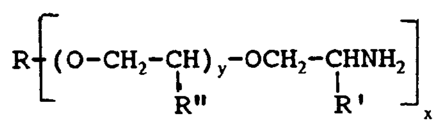

wherein R is a central moiety from a polyol; at least one R' is a straight or branched alkyl group having at least 10 carbon atoms, the balance being hydrogen; R" is hydrogen or an alkyl group having 1 or 2 carbon atoms; x is 2 or more and y is 20 to 80.

The present invention also provides a process for preparing the hindered polyetherpolyamines by reacting a hydroxy compound of the formula

$$R(OH)_x$$

or

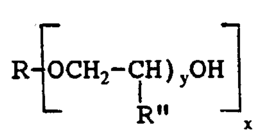

with a long chain alkyl epoxide of the formula

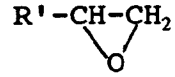

and then aminating the resulting polyol, in which formulae R, R', R", x and y have the meanings given above.

In carrying out these and other objects of the invention, there is provided, in one form, a process for preparing a polyurea elastomer. A hindered polyetherpolyamine is first obtained be reacting a polyol having two of more hydroxyl groups with an effective amount of long chain alkyl epoxide to give an at least partially hindered intermediate having hydroxyl terminations; and then aminating at least one of the hydroxyl terminations on the intermediate to primary amine groups to give an at least partially hindered polyetherpolyamine. Then the at least partially hindered polyetherpolyamine is reacted with a polyisocyanate in the presence of heat to give a polyurea elastomer.

It has been discovered that polyetherpolyamines can be hindered by capping a polyol with a long chain alkyl epoxide group before amination with ammonia. The long chain alkyl group provides steric hinderance of the primary aliphatic amine. This steric hindrance slows down the reactivity of the amine with the polyisocyanates. The slower reactivity of the amine group is useful in RIM or RRIM processes, since it allows for longer shot or flow times before reaction within the mould. Longer shot times allow larger parts to be made from existing equipment.

The hindered amines of the present invention may be made according to the following reaction scheme:

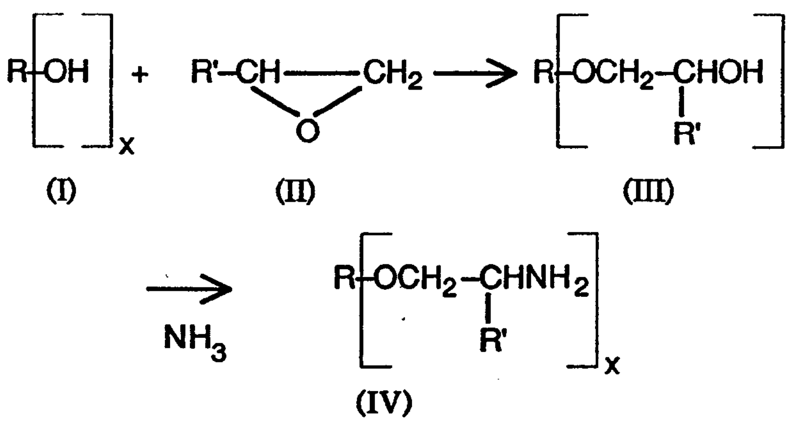


Compound (I) is a polyol and may be any of the commonly used polyols in RIM synthesis, as will be further described below. In a preferred embodiment of the invention, polyol (I) has already been oxyalkylated with ethylene oxide, propylene oxide, butylene oxide or mixtures thereof in block or random fashion, according to the procedures well known in the art. The moiety R represents the initiator centre of the polyamine, and may correspond to the above-described oxyalkylation product. The initiator centre is that left after the reaction of the initiator with the alkylene oxides. The oxyalkylated branches of the polyol (I) will terminate in hydroxyl groups. The number of hydroxyl terminations, designated by x should be at least 2, preferably from 2 to 8, most preferably from 2 to 6.

The long chain alkyl epoxide (II) has a straight or branched alkyl group R' having at least 10 carbon atoms, preferably from 10 to 20 carbon atoms, most preferably from 10 to 16 carbon atoms. In one embodiment, at least one mole of long chain alkyl epoxide (II) is reacted per hydroxyl group present on the polyol (I) to give oxyalkylated polyol intermediate (III), which is in turn aminated to give the final hindered polyetherpolyamine (IV). In another embodiment, less than all the hydroxyl groups may be reacted with an equivalent of long chain alkyl epoxide.

Somewhat more explicitly, if the prior alkoxylations are represented, the hindered polyetherpolyamine may have the structure (V):

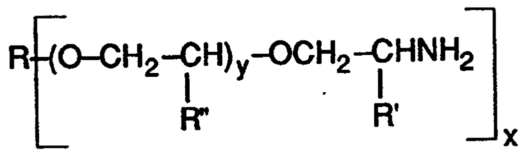

(V)

wherein R, R', and x are as defined above, R" is hydrogen or an alkyl group having one or two carbon atoms, and y is 20 to 80. In the embodiment where less than all the hydroxyl groups are reacted with an equivalent of long chain alkyl epoxide, compounds (IV) and (V) are partially hindered. In this event, at least one of the R' on the resulting molecule is a straight or branched alkyl group having at least 10 carbon atoms, preferably from 10 to 20 carbon atoms (most preferably 10 to 16 carbon atoms) and the remaining R' groups are hydrogen. In one embodiment, at least half the R' groups are straight or branched alkyl groups of at least 10 carbon atoms.

The capping of the oxyalkylated polyol (I) may be achieved at a temperature from 100 to 150°C without a catalyst. A catalyst may be present and is preferably an alkali metal hydroxide. There is often enough catalyst remaining from the oxyalkylation reactions to catalyze the capping. While it is contemplated that substantially all of the hydroxyl groups are capped with the long chain alkyl epoxide, it will be appreciated that a smaller percentage of hydroxyl groups may be reacted with the long chain alkyl epoxide to give only a partially hindered polyetherpolyamine, as described above. At least enough hydroxyl groups should be capped to slow down the reactivity of the polyetherpolyamine compared with that of the unhindered version of the same amine; this percentage will be called an effective amount herein. In one embodiment of the invention it is preferred that from 20 to 100% of the hydroxyl groups will be capped with the long chain alkyl epoxide, with a preferred range from 50 to 100%. It will be appreciated that the steric hindrance of the R' group next to the primary amine will reduce its activity somewhat. The slower reactivity of the amine group is useful in RIM or RRIM applications since it allows for longer shot times.

The polyhydric alcohols which can be used as initiators for reaction with alkylene oxide, long chain alkyl epoxide and ammonia to provide the hindered polyetherpolyamines of the present invention include, but are not limited to, ethylene glycol; propylene glycols; butylene glycols; pentane diols; *bis*(4-hydroxycyclohexyl)dimethylmethane; 1,4-dimethylolbenzene; glycerol; 1,2,6-hexanetriol; trimethylolpropane; mannitol; sorbitol; erythritol; pentaerythritol; their dimers, trimers and higher polymers, e.g. polyethylene glycols; polypropylene glycols; triglycerol; dipentaerythritol; polyallyl alcohol and polyhydric thioethers. Meeting the definition of the hindered polyetherpolyamines used in this invention are hindered polyfunctional amines corresponding to the JEFFAMINE® amines that are made by Texaco Chemical Company. JEFFAMINE® D-2000 and T-5000 amines are examples of JEFFAMINE® amines which correspond to hindered modified polyetherpolyamines which will give longer flow times when reacted with polyisocyanates. The alkoxylated initiators useful in the process of this invention preferably have a molecular weight of 2000 or more.

The polyisocyanates used to react with the hindered polyetherpolyamines of this invention may be aromatic or aliphatic polyisocyanates. Typical aromatic polyisocyanates include *p*-phenylene diisocyanate; polymethylene polyphenylisocyanate; 2,6-toluene diisocyanate; dianisidine diisocyanate; bitolylene diisocyanate; naphthalene-1,4-diisocyanate, *bis*(4-isocyanatophenyl)methane; *bis*)3-methyl-3-isocyanatophenyl)methane; *bis*(3-methyl-4-isocyanatophenyl)methane; and 4,4'-diphenylpropane diisocyanate.

Other aromatic polyisocyanates used in the practice of the invention are methylene-bridged polyphenyl polyisocyanate mixtures having a functionality from 2. These isocyanate compounds are produced by the phosgenation of corresponding methylene-bridged polyphenyl polyamines, which are conventionally produced by the reaction of formaldehyde and primary aromatic amines, such as aniline, in the presence of hydrochloric acid and/or other acidic catalysts. Known processes for preparing polyamines and corresponding methylene-bridged polyphenyl polyisocyanates therefrom are described in US-A-2683730, US-A-2950263, US-A-3012008, US-A-3344162 and US-A-3362979.

Usually, methylene-bridged polyphenyl polyisocyanate mixtures contain 20 to 100 wt. % of methylene diphenyldiisocyanate isomers, with the remainder being polymethylene polyphenyl diisocyanates having higher functionalities and higher molecular weights. Typical of these are polyphenyl polyisocyanate mixtures containing 20 to 100 wt. % methylene diphenyldiisocyanate isomers, of which 20 to 95 wt. % thereof is the 4,4'-isomer, with the remainder being polymethylene polyphenyl polyisocyanates of higher molecular weight and functionality that have an average functionality of from 2.1 to 3.5. These isocyanate mixtures are commercially available and can be prepared by the process described in US-A-3362979.

The most preferred aromatic polyisocyanate is methylene *bis*(4-phenylisocyanate) or MDI. Pure MDI, quasi-prepolymers of MDI and modified pure MDI, are all useful in the preparation of RIM elastomers. Since pure MDI is a solid and is thus often inconvenient to use, liquid products based on MDI are often used and are included in the scope of the terms MDI or methylene *bis*(4-phenylisocyanate) used herein. US-A-3394164 discloses an example of liquid MDI product. More generally, uretonimine-modified pure MDI is included also. This product is made by heating pure distilled MDI in the presence of a catalyst to give a mixture of pure MDI and modified MDI. Preferably, the amount of isocyanate used is the stoichiometric amount, based on all the ingredients in the formulation, or greater than the stoichiometric amount. Examples of commercial materials of this type are Dow Chemical Co.'s Isonate® 125M (pure MDI) and Isonate® 143L (liquid MDI).

Although not essential for the practice of this invention, additives which enhance the colour or properties of the polyurea elastomer may be used. For example, chopped or milled glass fibres, chopped or milled carbon fibres and/or other mineral fibres are useful. Additionally, chain extenders such as DETDA may be employed, as well as internal mould release agents, blowing agents, and other conventional additives.

The RIM polyurea elastomers of this invention are made in the conventional manner, in a mould at a temperature of 25 to 225°C and are then post cured at a temperature of from 225 to 400°C, preferably from 225 to 350°C. In one embodiment of the invention, the reaction of the hindered polyetherpolyamine with the polyisocyanate is conducted at a temperature from 25 to 130°C and a pressure of 0.1 to 27.7 MPa (0 to 4000 psi). The equivalent ratio of hindered polyetherpolyamine to polyisocyanate can be from 0.05 to 1.1. It will be appreciated that polyurea elastomers in general may be prepared according to these guidelines, and that the polyurea elastomer does not have to be a RIM elastomer made using RIM techniques and equipment.

Another type of additive, which may be required as post-curing temperatures approach 400°C or more, is an antioxidant. The materials which are well known to those skilled in the art as antioxidants include hindered phenols.

Although a catalyst is not required for the production of RIM materials, as the hindered polyetherpolyamine will react well with the polyisocyanate in a heated mould, a catalyst may be desired. Such a catalyst may include one or more of the following:

(a) Tertiary amines such as trimethylamine; triethylamine; N-methylmorpholine; N-ethylmorpholine; N,N-dimethylbenzylamine; N,N,-dimethylethanolamine; N,N,N',N'-tetramethyl-1,3-butanediamine; N,N-dimethylpiperazine; and 1,4-diazobicyclo[2.2.2.]- octane;

(b) Tertiary phosphines such as trialkylphosphines and dialkylbenzylphosphines;

(c) Strong bases such as alkali metal and alkaline earth metal hydroxides; alkoxides and phenoxides;

(d) Acidic metal salts of strong acids, such as ferric chloride; stannic chloride; stannous chloride; antimony trichloride; and bismuth nitrate or chloride;

(e) Chelates of various metals such as those which can be obtained from acetylacetone; benzoylacetone; trifluoroacetyl acetone; ethyl acetoacetate;salicylaldehyde;cyclopentanone-1-carboxylate; acetylacetonimine, *bis*-acetylacetonealkylenediamines; and salicylaldehydeimine, with various metals such as Be, Mg, Zn, Cd, Pd, Ti, Zr, Sn, As, Bi, Cr, Mo, Mn, Fe, Co and Ni;

(f) Alcoholates and phenolates of various metals such as $Ti(OR)_4$, $Sn(OR)_4$ and $Al(OR)_3$ wherein R is alkyl or aryl, and the reaction products of alcoholates with carboxylic acids, beta-diketones, and 2-(N,N-dialkylamino)alkanols;

(g) Salts of organic acids with a variety of metals, such as alkali metals, alkaline earth metals, Al, Sn, Pb, Mn, Co, Ni and Cu, including, for example, sodium acetate, stannous octoate, stannous oleate, lead octoate, metallic driers such as manganese and cobalt napthenate; and

(h) Organometallic derivatives of tetravalent tin, trivalent and pentavalent As, Sb and Bi, and metal carbonyls of iron and cobalt.

Of course, combinations of any of the above catalysts may be employed. Usually, the amount of catalyst, if employed, is from 0.01 to 5.0 parts by weight based on 100 parts by weight of the polyamine. More often, the amount of catalyst used is 0.2 to 2.0 parts by weight.

The preparation of the valuable RIM elastomers is described in the following illustrative Examples.

A-Component Preparation

Quasi No. 1

The preparation of standard quasi No. 1 was as follows:

90.8 Kg (200 lb) of PPG-2000 was added to a drum containing 136.2 Kg (300 lb) of Isonate 143L. The contents of the drum were rolled for several hours. After sitting for several days, the product was ready to use.

Quasi No. 2

The preparation of standard quasi No. 2 was as follows:

90.8 Kg (200 lb) of Thanol SF-5505 was added to a drum containing 136.2 Kg (300 lb) of Isonate 143L. The contents of the drum were rolled for several hours. After sitting for several days, the product was ready to use.

Determination of Flow Times

In some of the following examples, a rubber tube flow time was determined for the polyurea RIM system. This test determined flow viscosity more than gel time; however, it should still relate to practical flow characteristics in a mould.

In this test, the mixed A and B components were shot into a latex rubber tubing which had an inside diameter of 2.4 mm (3/32") and an outside diameter of 9.5 mm (3/8") at room temperature. The tube was connected directly to the nozzle on the head. At a constant throughput of 600 gram/s., the shot time was adjusted so that the material could flow through the tube without leaving a bulb after all flow stops. If too much material was shot into the tube, solidification at the leading flow front caused the incoming material to leave a bulb near the head. If this occurred, the subsequent shot time was decreased and the process repeated until no bulb was left. The maximum time measured by this test was reported as the rubber tube flow time.

Preparation of Polyurea RIM Elastomers

The following examples illustrate the use of the modified amines to make polyurea RIM elastomers. Examples 1 and 2 illustrate that the modified polyetherpolyamine used in Example 1, is slower than a standard JEFFAMINE® amine product, which is used in Example 2 (Comparison). The material in Example 3 was used in a body panel formulation. Example 4 illustrates the use of this material in a fascia formulation. Example 5 (Comparison) was similar to Example 4 except that a standard JEFFAMINE® amine product was additionally used. Even with only about half of the polyetherpolyamine amine groups next to a $C_{16}$-alkyl group in Example 4, the flow time of this RIM system was longer (0.38 seconds) than the control run (0.36 seconds). Example 6 is another example of the production of an unfilled body panel material using a modified polyetherpolyamine. The flat plaque mould used in the Examples had dimensions of 457 x 457 x 3 mm (18 x 18 x 1/8 inch).

Example 1

18.2 kg (40 lb) of a formulation consisting of DETDA (13.5 pbw), JEFFAMINE® D-2000 (10.0 pbw), Amine C (40.0 pbw), and zinc stearate (1.21 pbw) were charged into the B-component working tank of a Hi-Tech RIM machine. The contents of this tank were heated to 54°C (130°F). The A-tank on the RIM machine was charged with quasi No. 1 and heated to 53°C (128°F). The components were pressurized up to 17.3 MPa (2500 psi) on the A side and 17.3 Mpa (2500 psi) on the B side and injected into a rubber tube to determine the flow time of the material. The measured flow time in the tube was 0.32 seconds. The material was also shot into the flat plaque mould which had been preheated to 71°C (160°F). The part was removed from the mould in 30 seconds. The resulting elastomer was post-cured at 121°C (250°F) for one hour. Physical properties of the elastomer are listed in Table I.

Example 2 (Comparison)

18.2 kg (40 lb) of a formulation consisting of DETDA (13.5 pbw), JEFFAMINE® D-2000 (10.0 pbw), JEFFAMINE® T-3000 (40.0 pbw), and zinc stearate (1.21 pbw) were charged into the B-component working tank of a Hi-Tech RIM machine. the contents of this tank were heated to 54°C (130°F). The A-tank on the RIM machine was charged with quasi No. 1 and heated to 53°C (128°F). The components were pressurized up to 17.3 MPa (2500 psi) on the A side and 17.3 Mpa (2500 psi) on the B side and injected into a rubber tube to determine the flow time of the material. The measured flow time in the tube was 0.24 seconds. The material was also shot into the flat plaque mould which had been preheated to 71°C (160°F). No usable plaque could be made due to the very fast speed of this system. The material would not even fill the mould.

Example 3

18.2 Kg (40 lb) of a formulation consisting of DETDA (45.0 pbw), Amine C (25.0 pbw), and Amine B (25.0

pbw) were charged into the B-component working tank of an Accuratio RIM machine. The contents of this tank were heated to 46°C (115°F). The A-tank on the RIM machine was charged with quasi No. 2 and heated to 49°C (121°F). The components were pressurized up to 13.5 MPa (1950 psi) on the A side and 14.9 Mpa (2150 psi) on the B side and injected into the flat plaque mould which had been preheated to 100.5°C (213°F). The part was removed from the mould in 30 seconds. The resulting elastomer was post-cured at 155°C (311°F) for thirty minutes. Physical properties of the elastomer are listed in Table I.

Example 4

18.2 Kg (40 lb) of a formulation consisting of DETDA (13.5 pbw), Amine A (47.77 pbw), and zinc stearate (1.14 pbw) were charged into the B-component working tank of a Hi-Tech RIM machine. The contents of this tank were heated to 52°C (125°F). The A-tank on the RIM machine was charged with quasi No. 1 and heated to 53°C (128°F). The components were pressurized up to 20.1 MPa (2900 psi) on the A side and 20.1 MPa (2900 psi) on the B side and injected into the flat plaque mould which had been preheated to 71°C (160°F). The part was removed from the mould in 30 seconds. The resulting elastomer was post-cured at 121°C (250°F) for one hour. Physical properties of the elastomer are listed in Table I.

Example 5 (Comparison)

15.9 Kg (35 lb) of a formulation consisting of DETDA (45.99 pbw), JEFFAMINE® T-5000 (45.99 pbw), and zinc stearate (1.08 pbw) were charged into the B-component working tank of a Hi-Tech RIM machine. The contents of this tank were heated to 58°C (137°F). The A-tank on the RIM machine was charged with quasi No. 1 and heated to 54°C (129°F). The components were pressurized up to 20.8 MPa (3000 psi) on the A side and 22.9 Mpa (3300 psi) on the B side and injected into the flat plaque mould which had been preheated to 71°C (160°F). The part was removed from the mould in 30 seconds. The resulting elastomer was post-cured at 121°C (250°F) for one hour. Physical properties of the elastomer are listed in Table I.

Example 6

18.2 Kg (40 lb) of a formulation consisting of DETDA (38.7 pbw), Amine A (47.77 pbw), and zinc stearate (2.20 pbw) were charged into the B-component working tank of a Hi-Tech RIM machine. The contents of this tank were heated to 54°C (130°F). The A-tank on the RIM machine was charged with quasi No. 1 and heated to 53°C (129°F). The components were pressurized up to 20.1 MPa (2900 psi) on the A side and 20.1 Mpa (2900 psi) on the B side and injected into the flat plaque mould which had been preheated to 110°C (230°F). The part was removed from the mould in 30 seconds. The resulting elastomer was post-cured at 155°C (311°F) for one hour. Physical properties of the elastomer are listed in Table I.

TABLE I

Physical Properties of the RIM Elastomers

| Example | 7 | 8 | 9 | 10 | 11 |
|---|---|---|---|---|---|
| Formulation, pbw | | | | | |
| DETDA | 13.5 | 13.5 | 13.5 | 13.5 | 40.0 |
| Amine D (AMG-C16) | 14.25 | - | - | - | 49.25 |
| Amine E (AMG-C10) | - | 46.25 | - | - | - |
| JEFFAMINE T-5000 | - | - | - | 46.55 | - |
| Amine F (AMG-C1) | - | - | 46.25 | - | - |
| Zinc stearate | - | - | - | - | 2.26 |
| A-Component | | | | | |
| Quasi No. 1 | - | - | - | - | 134.49 |
| Quasi No. 2 | 47.97 | 47.95 | 48.5 | 47.93 | - |
| Properties | | | | | |
| Shore D | 64/52 | 60/54 | 1 | 58/49 | 71/66 |
| Tensile, psi | 3320 | 3248 | | 3528 | 4426 |
| Tensile, Mpa | 22.9 | 22.4 | | 24.3 | 30.5 |
| Ult. Elongation, % | 230 | 231 | | 245 | 269 |
| Tear, pli | 417 | 463 | | 436 | |
| Tear, N/m | 730 | 811 | | 764 | |
| 100% Modulus | 1840 | 1778 | | 1782 | |
| Flexural Modulus, psi | | | | | |
| -29°C (-20°F) | 41300 | 42700 | | 44900 | 144500 |
| 25°C (77°F) | 29200 | 29000 | | 28600 | 83000 |
| 70°C (158°F) | 27700 | 28400 | | 21500 | 64500 |
| Flexural Modulus, MPa | | | | | |
| 121°C (250°F) | 284.8 | 294.4 | | 309.6 | 966.3 |
| 155°C (311°F) | 201.3 | 200.0 | | 197.2 | 572.3 |
| 177°C (350°F) | 191.0 | 195.8 | | 148.2 | 444.7 |
| Heat sag, 150 mm O.H. | | | | | |
| 121°C (250°F) | 20.25 | 14.5 | | 18.5 | |
| 155°C (311°F) | | | | | 8.75 |
| 177°C (350°F) | | | | | 16.0 |
| Rubber tube flow times, seconds | 0.30 | 0.30 | | 0.24 | |

1 No properties were measured due to the fact that no usable plaques were made

Amine A (Examples 4 and 6) and Amine C (Examples 1 and 3) were based on trifunctional polyols, whereas Amine (B) (Example 3) was based on a difunctional polyol. To demonstrate that higher functionality polyols such as four-functional or tetrafunctional polyols may also be employed in this invention, Amines, D, E and F were prepared, which are described in the Glossary and used in Examples 7-11.

Preparation of Polyurea RIM Elastomers: Examples 7-11

Examples 7 and 8 illustrate the use of these modified polyetherpolyamines. Excellent looking plaques were

made with the modified amines. Example 9 is the control experiment in which an unhindered four-functional amine is used to make the RIM plaque. Undesirable pre-gelling is very obvious in this Example. Example 10 is a comparison of a trifunctional amine to the other three Examples. Slightly longer gel times were realised with the modified amines. Example 11 illustrates the use of modified amines in a different formulation such that higher modulus materials are made.

Example 7

DETDA (4.10 kg/9.04 lb) and the tetrafunctional amine terminated polyamine Amine D (AMG-C16) (14.06 kg/ 30.96 lb) were charged into the B component working tank of an Accuratio RIM machine. The contents of the tank were heated to 46°C (115°F) and the A-tank on the RIM machine was charged with quasi No. 2 and heated to 47°C (116°F). The components were pressurized up to 14.5 MPa (2100 psi) on the A side and 13.1 Mpa (1900 psi) on the B side and injected into the flat plaque mould which had been preheated to 72°C (161°F). The part was removed from the mould in 30 seconds. The appearance of the part was excellent. No signs of poor mixing in the plaque could be seen. The resulting elastomer was post-cured at 121°C (250°F) for one hour. Physical properties of the elastomer are listed in Table II along with the formulation.

Example 8

DETDA (4.10 kg/9.04 lb) and the tetrafunctional amine terminated polyamine Amine E (AMG-C10) (14.06 kg/ 30.96 lb) were charged into the B component working tank of an Accuratio RIM machine. The contents of the tank were heated to 49°C (120°F) and the A-tank on the RIM machine was charged with quasi No. 2 and heated to 48°C (118°F). The components were pressurized up to 14.5 MPa (2100 psi) on the A side and 13.4 Mpa (1950 psi) on the B side and injected into the flat plaque mould which had been preheated to 72°C (161°F). The part was removed from the mould in 30 seconds. The appearance of the part was excellent. No signs of poor mixing in the plaque could be seen. The resulting elastomer was post-cured at 121°C (250°F) for one hour. Physical properties of the elastomer are listed in Table II along with the formulation.

Example 9 (Comparison)

DETDA (3.08 kg/6.78 lb) and the tetrafunctional polyetherpolyamine prepared from a α-methylglucoside and propylene oxide, Amine F (AMG-C1) (10.54 kg/ 23.22 lb) were charged into the B component working tank of a Hi-Tech RIM machine. The contents of the tank were heated to 54°C (130°F) and the A-tank on the RIM machine was charged with the quasi No. 2 and heated to 54°C (130°F). The components were pressurized up to 13.8 MPa (2000 psi) on the A side and 13.8 Mpa (2000 psi) on the B side and injected into the flat plaque mould which had been preheated to 71°C (160°F). The part was removed from the mould in 30 seconds. The appearance of the part was very poor. Poor mixing streaks could be seen throughout the part.

Example 10 (Comparison)

DETDA (4.14 kg/9.11 lb) and JEFFAMINE® T-5000 polyetherpolyamine (14.02 kg/ 30.89 lb) were charged into the B component working tank of an Accuratio RIM machine. The contents of the tank were heated to 48°C (118°F) and the A-tank on the RIM machine was charged with the quasi No. 2 and heated to 49°C (120°F). The components were pressurized up to 14.5 MPa (2100 psi) on the A side and 13.1 Mpa (1900 psi) on the B side and injected into the flat plaque mould which had been preheated to 71°C (160°F). The part was removed from the mould in 30 seconds. The resulting elastomer was post-cured at 121°C (250°F) for one hour. Physical properties of the elastomer are listed in Table II along with the formulation.

Example 11

DETDA (6.95 kg/15.3 lb) and the tetrafunctional amine terminated polyamine Amine D (AMG-C16) (8.55 kg/ 18.84 lb) and zinc stearate (0.39 kg/0.86 lb) were charged into the B-component working tank of a Hi-Tech RIM machine. The contents of the tank were heated-to 51°C (124°F) and the A-tank on the RIM machine was charged with quasi No. 1 and heated to 54°C (129°F). The components were pressurized up to 15.2 MPa (2200 psi) on the A side and 15.9 Mpa (2300 psi) on the B side and injected into the flat plaque mould which had been preheated to 110°C (230°F). The part was removed from the mould in 30 seconds. The resulting elastomer was post-cured at 155°C (311°F) for thirty minutes. Physical properties of the elastomer are listed in Table II along with the formulation.

TABLE II

Physical Properties of the RIM Elastomers

| Example | 7 | 8 | 9 | 10 | 11 |
|---|---|---|---|---|---|
| **Formulation, pbw** | | | | | |
| DETDA | 13.5 | 13.5 | 13.5 | 13.5 | 40.0 |
| Amine D (AMG-C16) | 14.25 | - | - | - | 49.25 |
| Amine E (AMG-C10) | - | 46.25 | - | - | - |
| JEFFAMINE T-5000 | - | - | - | 46.55 | - |
| Amine F (AMG-C1) | - | - | 46.25 | - | - |
| Zinc stearate | - | - | - | - | 2.26 |
| **A-Component** | | | | | |
| Quasi No. 1 | - | - | - | - | 134.49 |
| Quasi No. 2 | 47.97 | 47.95 | 48.5 | 47.93 | - |
| **Properties** | | | | | |
| Shore D | 64/52 | 60/54 | 1 | 58/49 | 71/66 |
| Tensile, psi | 3320 | 3248 | | 3528 | 4426 |
| Tensile, Mpa | 22.9 | 22.4 | | 24.3 | 30.5 |
| Ult. Elongation, % | 230 | 231 | | 245 | 269 |
| Tear, pli | 417 | 463 | | 436 | |
| Tear, N/m | 730 | 811 | | 764 | |
| 100% Modulus | 1840 | 1778 | | 1782 | |
| Flexural Modulus, psi | | | | | |
| -29°C (-20°F) | 41300 | 42700 | | 44900 | 144500 |
| 25°C (77°F) | 29200 | 29000 | | 28600 | 83000 |
| 70°C (158°F) | 27700 | 28400 | | 21500 | 64500 |
| Flexural Modulus, MPa | | | | | |
| 121°C (250°F) | 284.8 | 294.4 | | 309.6 | 966.3 |
| 155°C (311°F) | 201.3 | 200.0 | | 197.2 | 572.3 |
| 177°C (350°F) | 191.0 | 195.8 | | 148.2 | 444.7 |
| Heat sag, 150 mm O.H. | | | | | |
| 121°C (250°F) | 20.25 | 14.5 | | 18.5 | |
| 155°C (311°F) | | | | | 8.75 |
| 177°C (350°F) | | | | | 16.0 |
| Rubber tube flow times, seconds | 0.30 | 0.30 | | 0.24 | |

1 No properties were measured due to the fact that no usable plaques were made

For example, one skilled in the art may discover that a certain combination or proportion of certain hindered polyetherpolyamines may give advantageous properties, or that certain desirable results are obtained by the use of hindered polyetherpolyamine with an unhindered polyamine.

GLOSSARY

DETDA Diethyltoluene diamine made by Ethyl Corp.

JEFFAMINE® D-2000 Diamine sold by Texaco Chemical Company of the following structure:

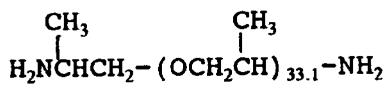

JEFFAMINE® T-3000 Partially aminated polyol having 1.0 meq/g total acetylatables, a total amine content of 0.99 meq/g, and a primary amine content of 0.93 meq/g.

JEFFAMINE® T-5000 Partially aminated polyol having 0.55 meq/g total acetylatables, a total amine content of 0.48 meq/g, and a primary amine content of 0.43 meq/g.

Isonate® 143L Liquified diphenylmethane diisocyanate sold by Dow Chemical Co.

Modified Polyetherpolyamines:

Amine A - This is a trifunctional polyetherpolyamine in which half of the hydroxyl groups were reacted with a C16 epoxide before amination. This material had a total amine value of 0.622 meq/g.

Amine B - This material was prepared by capping a 2000 molecular weight polyoxypropylenediol with a C16 epoxide before amination. This material had a total amine value of 0.963 meq/g.

Amine C - This material was prepared by capping a 3000 molecular weight polyoxypropylene triol with a C16 epoxide before amination. This material had a total amine value of 0.975 meq/g.

Amine D - This amine was prepared by aminating a polyol prepared from a-methylglucoside and propylene oxide which had been capped off with a C16 epoxide before amination. Analysis of this material indicated a total acetylatables content of 0.71 meq/g. and a total amine content of 0.568 meq/g. An abbreviation for this amine is AMG-C16.

Amine E - This amine was prepared by aminating a polyol prepared from a-methylglucoside and propylene oxide which had been capped off with a C10 epoxide before amination. Analysis of this material indicated a total acetylatables content of 0.68 meq/g. and a total amine content of 0.567 meq/g. An abbreviation for this amine is AMG-C10.

Amine F - This comparative amine was prepared by aminating a four-functional polyol prepared from α-methylglucoside and propylene oxide. Analysis of this material indicated a total acetylatables content of 0.72 meq/g. and a total amine content of 0.622 meq/g. An abbreviation for this amine is AMG-C1.

The amines A to F had the compositions

| Amine | Initiator | Oxide, % | | |
|---|---|---|---|---|
| | | Propylene Oxide | C10 1,2-epoxide | C16 1,2-epoxide |
| A | Glycerol | 92.4 | - | 6.1 |
| B | Diol(PPG-2000) | 74.8 | - | 25.2 |
| C | Glycerol | 73.1 | - | 24.1 |
| D | α-Methyl glucoside | 86.1 | - | 11.6 |
| E | α-Methyl glucoside | 90.6 | 7.9 | - |
| F | α-Methyl glucoside | 97.7 | - | - |

PPG-2000 Polypropylene glycol with an average molecular weight of about 2000.

Thanol® SF-5505 A 5000 molecular weight high reactivity glycerine-based triol made by ARCO Chemical Co.

Zinc Stearate ED (extra dense) heat stable, sold by Witco Chemical Corp.

## Claims

1. A process for preparing a polyurea elastomer by reacting a polyetherpolyamine with a polyisocyanate

characterised in that the polyetherpolyamine is a hindered polyetherpolyamine obtainable by

reacting a polyol having two or more hydroxyl groups with an effective amount of a long chain alkyl epoxide to give an at least partially hindered intermediate having hydroxyl terminations; and

aminating at least one of the hydroxyl terminations on the intermediate to primary amino groups.

2. A process according to Claim 1 characterised in that the hindered polyetherpolyamine has the structure:

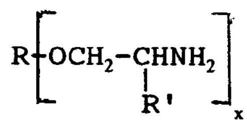

or

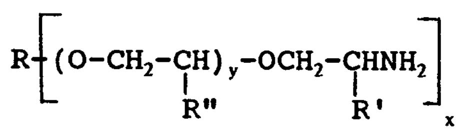

wherein R is a central moiety from a polyol; at least one R' is a straight or branched alkyl group having at least 10 carbon atoms, the balance being hydrogen; R" is hydrogen or an alkyl group having 1 or 2 carbon atoms; x is 2 or more and y is 20 to 80.

3. A process according to Claim 1 or 2 characterised in that the equivalents ratio of hindered polyetherpolyamine to polyisocyanate is from 0.05 to 1.1.

4. A process according to any one of Claims 1 to 3 characterised in that the reaction of the hindered polyetherpolyamine with the polyisocyanate is conducted at a temperature of 25 to 225°C and a pressure of 0.1 to 27.7 MPa (0 to 4000 psi).

5. A process according to any one of Claims 1 to 4 characterised in that the polyisocyanate and hindered polyetherpolyamine are reacted in a closed mould by a reaction injection moulding (RIM) process.

6. A hindered polyetherpolyamine having the structure:

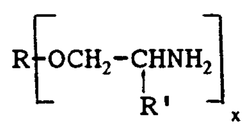

or

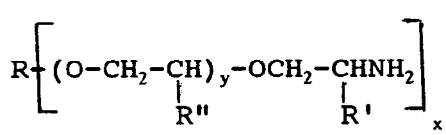

characterised in that R is a central moiety from a polyol; at least one R' is a straight or branched alkyl group having at least 10 carbon atoms, the balance being hydrogen; R" is hydrogen or an alkyl group having 1 or 2 carbon atoms; x is 2 or more and y is 20 to 80.

7. A process for preparing a hindered polyetherpolyamine according to Claim 6 characterised by reacting a hydroxy compound of the formula

$$R(OH)_x$$

or

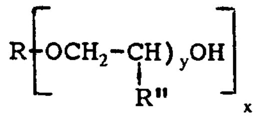

with a long chain alkyl epoxide of the formula

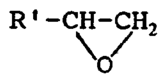

and then aminating the resulting polyol, in which formulae R, R', R", x and y have the meanings given in Claim 6.